Europäisches Patentamt

European Patent Office

Office européen des brevets

(11) Veröffentlichungsnummer: **0 065 731**
B1

(12) # EUROPÄISCHE PATENTSCHRIFT

(45) Veröffentlichungstag der Patentschrift:
11.06.86

(51) Int. Cl.⁴: **B 28 C 7/16, B 28 C 5/38**

(21) Anmeldenummer: **82104295.9**

(22) Anmeldetag: **17.05.82**

(54) **Betonspritzmaschine.**

(30) Priorität: **27.05.81  CH 3467/81**

(43) Veröffentlichungstag der Anmeldung:
**01.12.82 Patentblatt 82/48**

(45) Bekanntmachung des Hinweises auf die Patenterteilung:
**11.06.86 Patentblatt 86/24**

(84) Benannte Vertragsstaaten:
**AT FR GB SE**

(56) Entgegenhaltungen:
**CH - A - 566 924**
**DE - A - 1 802 540**
**FR - A - 2 136 409**

(73) Patentinhaber: **INTRADYM MASCHINEN AG,
Hegmattenstrasse 26, CH-8404 Winterthur (CH)**

(72) Erfinder: **Vogler, Rudolf, Hegibachstrasse 76,
CH-8032 Zürich (CH)**
Erfinder: **Egger, Hans Rudolf, Rebhusstrasse 33,
CH-8126 Zumikon (CH)**

(74) Vertreter: **Patentanwälte Schaad, Balass & Partner,
Dufourstrasse 101 Postfach, CH-8034 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine Betonspritzmaschine nach dem Oberbegriff des Anspruchs 1.

Bei einer solchen Betonspritzmaschine werden die im Rotor angeordneten Kammern der Reihe nach mit einem Betongemisch gefüllt und nach einem bestimmten Drehwinkel bei sich drehendem Rotor mittels Druckluft ausgeblasen. Nach dem Verlassen der Druckluft- und der axial gegenüberliegenden Material- Austrittsöffnung beim Weiterdrehen des Rotors enthalten die beiderends durch die Dichtungsplatten abgedichteten Kammern noch einen unerwünschten Ueberdruck, so dass die sich in der jeweiligen Kammer noch befindende Luft ins Freie abgelassen werden muss. Zu diesem Zweck ist es bekannt, in der oben liegenden Dichtungsplatte des mit senkrechter Achse stehenden Rotors eine Aussparung vorzusehen, die radial in einen durch einen den Rotor umgebenden Staubmantel begrenzten Zwischenraum mündet. Vom Zwischenraum mündet eine Oeffnung in ein Luftfilter und von diesem ins Freie.

Das Luftfilter ist erforderlich, da die aus der zu entlüftenden Kammer austretende Luft in der Kammer noch verbliebene Reste des Betongemisches, insbesondere Staub, mitreisst. Diese Materialreste müssen auch die Aussparung in der Dichtungsplatte passieren. Da diese Aussparung in ihrer Höhe durch die Dicke der Dichtungsplatte begrenzt ist, stellt sie einen Engpass für die austretende Luft dar und neigt daher zum Verstopfen durch einen Teil der mitgerissenenen Materialreste. Deshalb ist es notwendig, die Aussparung von Zeit zu Zeit von den angesammelten Materialresten zu befreien. Zur Erleichterung dieser von Hand durchzuführenden Arbeit ist der Staubmantel in einen oberen und einen unteren Teil unterteilt. Der Auslass mit dem Luftfilter befindet sich im unteren Teil des Staubmantels, damit der obere Teil ungehindert zum Entfernen der Materialreste aus der Aussparung geöffnet werden kann.

Nachteilig ist bei dieser bekannten Maschine, dass die vorstehend genannte Reinigungsarbeit einen Betriebsunterbruch erfordert. Es ist natürlich auch möglich, diese Reinigung bei laufender Maschine vorzunehmen, jedoch besteht dabei eine Unfallgefahr, einerseits wegen des laufenden Rotors und andererseits wegen der austretenden Materialreste und der damit verbundenen erheblichen Staubentwicklung gerade an derjenigen Stelle, an welcher die Reinigungsarbeit vorgenommen werden muss.

Der Erfindung liegt deshalb die Aufgabe zugrunde, eine Betonspritzmaschine der eingangs genannten Art derart zu gestalten, dass die Verstopfungsgefahr der Entlüftungskanäle ohne einen Betriebsunterbruch behoben werden kann.

Die Lösung der gestellten Aufgabe gelingt erfindungsgemäss durch die im kennzeichnenden Teil des Anspruchs 1 angegebenen Merkmale.

Die von aussen durch ein Betätigungselement bewegbare Räumvorrichtung ermöglicht es, die im Engpass der Aussparung angesammelten Materialreste während des Betriebes zu lösen, so dass diese Reste von der ausströmenden Luft mitgerissen werden und sich demzufolge im Luftfilter ansammeln können, welches sich aussen an der Maschine befindet und deshalb leicht zugänglich ist. Das gelegentliche Betätigen der Räumvorrichtung beansprucht nur wenig Zeit für die Bedienungsperson und erfordert keine Betriebsunterbrechung. Die Räumvorrichtung trägt damit wesentlich zu einem störungsfreien Betrieb der Betonspritzmaschine bei.

Das Betätigungselement kann in der Spannplatte geführt sein. Eine solche Ausgestaltung beansprucht wenig zusätzliche Konstruktionselemente und ermöglicht eine gute Zugänglichkeit für die Bedienungsperson.

Die Räumvorrichtung kann eine sich über die Aussparung in der oberen Dichtungsplatte im wesentlichen in Strömungsrichtung der austretenden Luft erstreckende flexible Lamelle aufweisen, wobei die Lamelle zusammen mit der Dichtungsplatte aus einem Stück bestehen kann. Derartige Ausgestaltungen ermöglichen das Absprengen einer an der Lamelle anhaftenden Materialschicht und erleichtern die Montage, da die Lamelle nicht gesondert montiert zu werden braucht.

Wenn die Lamelle eine schalenförmige Ausbuchtung aufweist, wird dadurch ihre Betätigung zum Absprengen der anhaftenden Materialschicht erleichtert, indem die Ausbuchtung beim Betätigen der Räumvorrichtung nur nach innen gedrückt zu werden braucht.

Wenn die Ausbuchtung der Lamelle gemäss einer weiteren Ausgestaltung der Erfindung in einer Vertiefung in der Spannplatte liegt, ergibt sich eine vorteilhafte organische Anpassung der Lamelle an die Spannplatte. Noch wesentlicher ist es jedoch, dass dadurch der Auslassquerschnitt vergrössert und bei abnehmender Dicke der Dichtungsplatte infolge Verschleisses weniger eng begrenzt wird.

Eine die Aussparung in der Dichtungsplatte in ihrer vollen Grundfläche überspannende Lamelle dient gleichzeitig als Abdichtung nach aussen, um einen Luftaustritt an unerwünschten Stellen zu verhindern.

Eine vorteilhafte Ausgestaltung der Erfindung ergibt sich, wenn das Betätigungselement einen in der Vertiefung radial zur Achse des Rotors verschiebbaren Arm aufweist, um die Lamelle beim Betätigen des Betätigungselementes aus der Vertiefung heraus zu verdrängen. Der besondere Vorteil einer solchen Anordnung ist, dass kein zusätzlicher Raum für das Betätigungselement beansprucht wird und die Gefahr einer Berührung mit dem laufenden Rotor ausgeschlossen ist.

Gemäss einer weiteren Ausgestaltung der Erfindung kann die Lamelle mit ihrem radial aussen liegenden Rand in Umfangsrichtung die Fortsetzung einer Dichtungslippe bilden, welche am ganzen Umfang der Dichtungsplatte angeformt ist und über welche sich ein den Rotor umgebender Staubmantel an die Spannplatte anschliesst. Damit übernimmt die Dichtungsplatte insgesamt zwei weitere Funktionen, nämlich zusätzlich zur angeformten Lamelle auch noch diejenige einer Dichtung für den Staubmantel.

Wenn die ins Freie bzw. in das Luftfilter mündende Austrittsöffnung den Staubmantel an der der Aussparung radial gegenüberliegenden Stelle durchsetzt, ergibt sich ein gerader Weg für die austretende Luft. Dadurch lassen sich die sonst erforderlichen Umlenkungen der austretenden Luft durch den durch den Staubmantel begrenzten Zwischenraum vermeiden.

An Hand der Zeichnungen wird ein Ausführungsbeispiel des Erfindungsgegenstandes näher erläutert. Es zeigen:

Fig. 1 einen Axialschnitt durch den Rotor und die angrenzenden Teile einer Betonspritzmaschine,

Fig. 2 die Auslassöffnung in vergrösserter Dirstellung gemäss Fig. 1 und

Fig. 3 eine Schnittansicht nach der Linie III-III nach der Fig. 2.

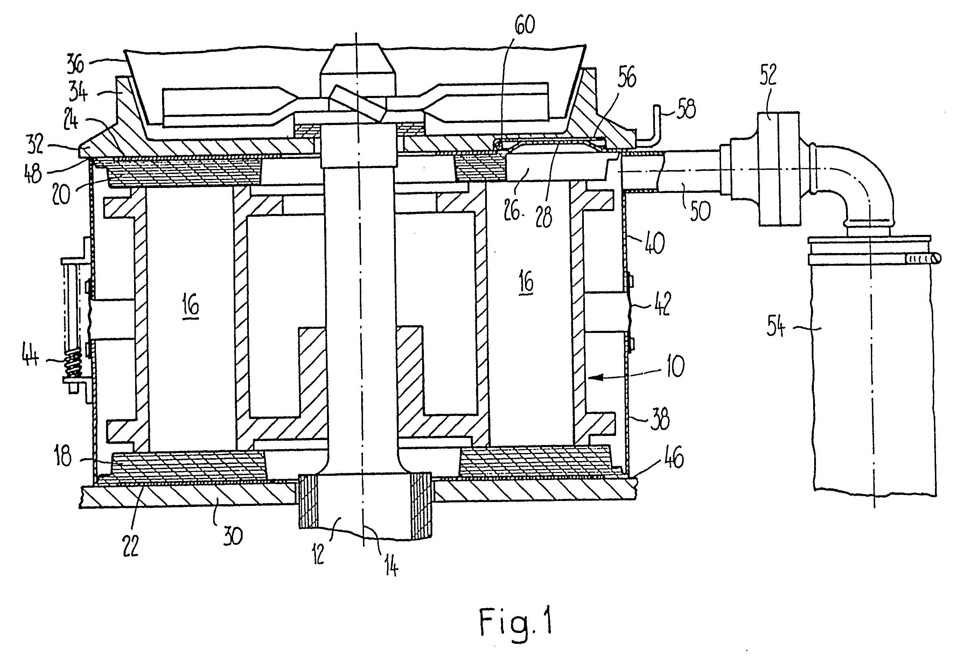

Die Figur 1 zeigt einen Rotor 10, der mit einer vertikal angeordneten Welle 12 drehfest verbunden ist. Konzentrisch um die Drehachse weist der Rotor beiderends offene Kammern 16 auf. Stirnseitig sind diese Kammern 16 bis auf eine nicht dargestellte Materialeinfüllöffnung, eine ebenfalls nicht dargestellte Materialaustrittsöffnung sowie eine ebenfalls nicht dargestellte Druckluftzuführöffnung durch eine untere Dichtungsplatte 18 und eine obere Dichtungsplatte 20 abgedichtet. Die beiden Dichtungsplatten 18 und 20 bestehen aus einem gummielastischen Material und sind auf je einer metallischen Trägerplatte 22 bzw. 24 aufvulkanisiert.

Zusätzlich zu den nicht dargestellten und für die vorliegenden Erläuterungen unwesentlichen Oeffnungen weist die obere Dichtungsplatte 20 eine Aussparung 26 auf. Die Aussparung 26 ist von einer nach oben ausgebuchteten flexiblen Lamelle 28 überspannt, die zusammen mit der oberen Dichtungsplatte 20 aus einem Stück besteht.

Die untere Dichtungsplatte 18 liegt mit ihrer metallischen Platte 22 auf einer Grundplatte 30 auf. Die obere Dichtungsplatte 20 wird durch eine Spannplatte 32 mittels ihrer metallischen Platte 24 gegen den Rotor 10 gedrückt, um beiderends eine ausreichende Abdichtung der Kammern 16 zu erzielen. Der Rotor 10 ist auf der Welle 12, welches beispielsweise eine Vierkantwelle sein kann, axial verschiebbar, so dass die Spannkraft der Spannplatte 32 auf die untere und obere Abdichtung der Kammern 16 gegen die Dichtungsplatten 18 und 20 einen Einfluss ausübt. Die Spannplatte 32 weist einen sich nach oben erstreckenden Rand 34 zur Aufnahme eines nur teilweise dargestellten Einfülltrichters 36 auf.

Die beiden Dichtungsplatten 18 und 20 sind während des Betriebes durch den sich drehenden Rotor 10 und dem in den Kammern 16 beförderten, meist trockenen Betongemisch einem Verschleiss unterworfen. Durch erneutes Planschleifen lassen sich die Dichtungsplatten 18 und 20 jedoch mehrmals verwenden. Die abnehmende Dicke der beiden Dichtungsplatten wird dabei durch ein Nachstellen der Spannplatte 32 wieder ausgeglichen.

Der Rotor 10 ist von einem ortsfesten Staubmantel umgeben, der aus zwei übereinander angeordneten Blechzylindern 38 und 40 besteht, die durch einen balgartigen Gummizylinder 42 luftdicht miteinander verbunden sind. Vier gegeneinander um 90° versetzte Federn 44 drücken die Blechzylinder 38 und 40 auseinander und pressen sie gegen eine untere und eine obere Dichtlippe (46, 48), die an der unteren bzw. an der oberen Dichtungsplatte 18 bzw. 20 einstückig angeformt ist. Der balgartige Gummizylinder 42 dient nicht nur als Staubdichtung, sondern auch zum Ausgleich des Abstandes zwischen der Grundplatte 30 und der Spannplatte 32, der sich als Folge abgeschliffener Dichtungsplatten 18 und 20 verändert.

Aus dem oberen Blechzylinder 40 erstreckt sich in radialer Richtung ein Auslassstutzen 50, an welchem über eine Kupplung 52 ein Luftfilter 54 angeschlossen ist. Das Luftfilter 54 kann beispielsweise ein Filtersack sein.

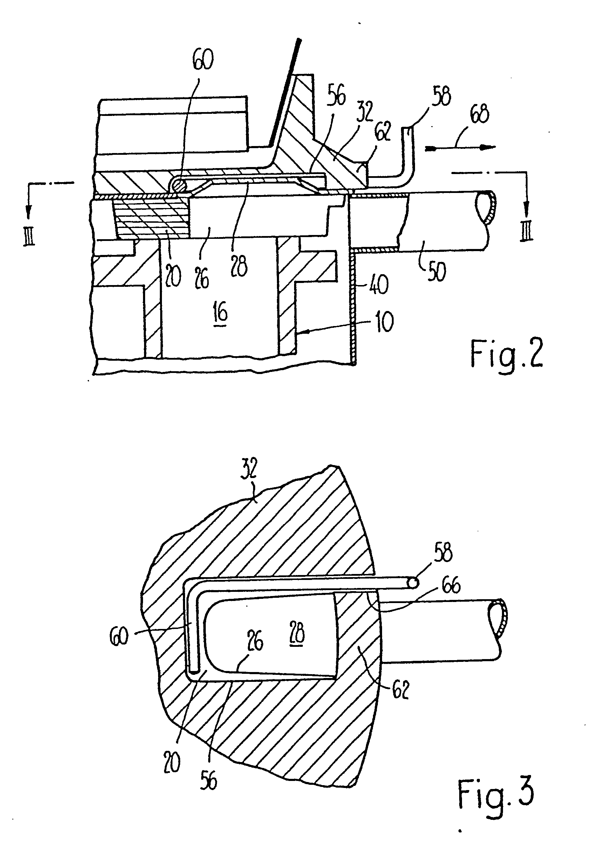

Die Figur 2 zeigt in vergrösserter Darstellung einen Teilschnitt aus der Figur 1. Es ist aus dieser Figur ersichtlich, dass die eine schalenförmige Ausbuchtung aufweisende Lamelle 28 in einer in der Spannplatte 32 angeordneten Vertiefung 56 liegt. Radial zur Vertiefung 56 ist in der Spannplatte 32 ein Betätigungselement 58 verschiebbar angeordnet. Das Betätigungselement 58 weist einen rechtwinklig zur Betätigungsrichtung liegenden Arm 60 auf.

Aus der Figur 3 ist ersichtlich, dass sich der Arm 60 über die Breite der Vertiefung 56 erstreckt. Die Vertiefung 56 entspricht in der Draufsicht etwa einem Rechteck, welches sich radial bis an einen äusseren Randbereich 62 erstreckt. Ein Längsglied 64 des Betätigungselementes 58 ist in einer Bohrung 66 geführt, welche den äusseren Randbereich 62 durchsetzt.

Ferner ist aus der Figur 3 ersichtlich, dass die Lamelle 28 die Aussparung 26 in der oberen Dichtungsplatte 20 überspannt. Die Breite der in der Spannplatte 32 angeordneten Vertiefung 56 ist so bemessen, dass sie etwa der grössten Breite der Lamelle 28 plus dem Durchmesser des Längsgliedes 64 des Betätigungselementes 58 entspricht, so dass das Längsglied 64 und die in die Vertiefung 56 hinein ausgebuchtete Lamelle 28 die Breite der Vertiefung 56 ausfüllen. Die der Lamelle 28 entsprechende Form der Aussparung 26 in der oberen Dichtungsplatte 20 ist annähernd glockenförmig, wobei die grösste Breite radial nach aussen gerichtet ist. Aus den Figuren 2 und 3 ist gut ersichtlich, dass beim Herausziehen des Betätigungselementes 58 in pfeilrichtung 68 der Arm 60 die Lamelle 28 aus der Vertiefung 56 hinausverdrängt. Diese Verdrängung dient zum Absprengen von Materialresten, die sich an der Lamelle 28 angesetzt haben.

Die Ausbuchtung der Lamelle 28 überragt in radialer Richtung die obere äussere Kante des Rotors 10, so dass auch dann noch ein genügend hoher Spalt über der äusseren Rotorkante als Auslassöffnung vorhanden ist, wenn die obere Dichtungsplatte 20 infolge Verschleisses eine geringere Dicke aufweist.

Da der äussere Rand der beiden Dichtungsplatten 18 und 20 je eine Dichtlippe 46 bzw. 48 aufweist, lassen sich separate Dichtungselemente zum Abdichten des aus den Teilen 38, 40 und 42 bestehenden Staubmantels einsparen. Der radial äussere Rand der Lamelle 28 bildet umfangsseitig die Fortsetzung der Dichtungslippe 48.

Die der Aussparung 26 radial gegenüberliegende Anordnung des Auslassstutzens 50 erspart unnötige Umlenkungen des austretenden Luftstromes, wie dies bei bekannten Konstruktionen der Fall ist, bei denen der Auslassstutzen im unteren Blechzylinder 38 angeordnet ist, damit der obere Blechzylinder 40 zum Reinigen der Aussparung 26 leichter entfernt werden konnte.

Die Anordnung der ausgebuchteten flexiblen Lamelle 28 in der Vertiefung 56 entspricht einer Auskleidung dieser Vertiefung. Die Lamelle 28 bildet zusammen mit dem Arm 60 des Betätigungselementes 58 die Räumvorrichtung, welche zum Ausräumen der Aussparung 26 dient. Diese Arbeit kann also während des Betriebes der Betonspritzmaschine ohne Oeffnen des Staubmantels und damit ohne jegliche Unfallgefahr durchgeführt werden.

**Patentansprüche**

1. Betonspritzmaschine mit einem Rotor (10), der konzentrisch um seine Drehachse (14) und parallel zu dieser angeordnete Kammern (16) zur Aufnahme des Betongemisches aufweist und der stirnseitig durch Dichtungsplatten (18, 20) aus einem gummielastischen Material abgedichtet ist, mit einer für die jeweils entleerte Kammer bestimmten Entlüftungsöffnung, die durch eine Aussparung (26) in einer der Dichtungsplatten (20) gebildet ist und über ein Luftfilter (54) ins Freie mündet, wobei diese Dichtungsplatte (20) durch eine deckelartige Spannplatte (32) gegen die Stirnfläche des Rotors (10) vorgespannt ist, dadurch gekennzeichnet, dass in der Aussparung (26) eine von aussen durch ein Betätigungselement (58) bewegbare Räumvorrichtung (60, 28) angeordnet ist.

2. Betonspritzmaschine nach Anspruch 1, dadurch gekennzeichnet, dass das Betätigungselement (58) in der Spannplatte (32) geführt ist.

3. Betonspritzmaschine nach Anspruch 1, dadurch gekennzeichnet, dass die Räumvorrichtung eine sich über die Aussparung (26) im wesentlichen in Strömungsrichtung erstreckende flexible Lamelle (28) aufweist.

4. Betonspritzmaschine nach Anspruch 3, dadurch gekennzeichnet, dass die Lamelle (28) zusammen mit der Dichtungsplatte (20) aus einem Stück besteht.

5. Betonspritzmaschine nach Anspruch 3 oder 4, dadurch gekennzeichnet, dass die Lamelle (28) eine schalenartige Ausbuchtung aufweist.

6. Betonspritzmaschine nach Anspruch 5, dadurch gekennzeichnet, dass die Ausbuchtung der Lamelle in einer Vertiefung (56) in der Spannplätte (32) liegt.

7. Betonspritzmaschine nach Anspruch 6, dadurch gekennzeichnet, dass die Lamelle (28) die Aussparung (56) in ihrer vollen Grundfläche überspannt.

8. Betonspritzmaschine nach einem der Ansprüche 6 oder 7, dadurch gekennzeichnet, dass das Betätigungselement (58) einen in der Vertiefung (56) radial zur Achse (14) des Rotors (10) verschiebbaren Arm (60) aufweist, um die Lamelle (28) beim Betätigen des Betätigungselementes (58) aus der Vertiefung (56) heraus zu verdrängen.

9. Betonspritzmaschine nach Anspruch 7, dadurch gekennzeichnet, dass die Lamelle (28) mit ihrem radial aussen liegenden Rand in Umfangsrichtung die Fortsetzung einer Dichtungslippe (48) bildet, welche am ganzen Umfang der Dichtungsplatte (20) angeformt ist und über welche sich ein den Rotor (10) umgebender Staubmantel (38, 40, 42) an die Spannplatte (32) anschliesst.

10. Betonspritzmaschine nach Anspruch 9, dadurch gekennzeichnet, dass die über das Luftfilter (54) ins Freie mündende Auslassöffnung (50) den Staubmantel (40) an der der Aussparung (26) radial gegenüberliegenden Stelle durchsetzt.

**Claims**

1. A concrete gun with a rotor (10) which has chambers (16) disposed concentrically around its axis of rotation (14) and parallel to the latter for receiving the concrete mixture and which is sealed at its ends by sealing plates (18, 20) made of an elastic rubber material with a ventilation opening for the respective emptied chamber which is formed by a recess (26) in one of the sealing plates (20) and which issues into the open via an air filter (24), this sealing plate (20) being prestressed by a lid type clamping plate (32) against the front end of rotor (10), characterised in that in the recess (26), there is arranged an evacuation device (60, 28) which can be moved from the outside by an actuating element (58).

2. A concrete gun according to Claim 1, characterised in that the actuating element (58) is carried in the clamping plate (32).

3. A concrete gun according to Claim 1, characterised in that the evacuation device has a flexible strip (28) extending over the recess (26) substantially in the direction of flow.

4. A concrete gun according to Claim 3, characterised in that the strip (28) does, together with the sealing plate (20), consist of one piece.

5. A concrete gun according to Claims 3 or 4, characterised in that the strip (28) has a dish-like indentation.

6. A concrete gun according to Claim 5, characterised in that the indentation of the strip lies in a recess (56) in the clamping plate (32).

7. A concrete gun according to Claim 6, characterised in that the strip (28) does span the recess (56) over its whole area.

8. A concrete gun according to one of Claims 6 or 7, characterised in that the actuating element (58) has an arm (60) displaceable in the recess (56) radially to the axis (14) of the rotor (10), in order to displace strip (28) from recess (56) when the actuating element (58) is operated.

9. A concrete gun according to Claim 7, characterised in that the strip (28) does, with its radial outer edge, form the continuation of a sealing lip (48) which is added over the whole periphery of the sealing plate (20) and over which there is joined to the clamping plate (32) a dust cover (38, 40, 42) surrounding rotor (10).

10. A concrete gun according to Claim 9, characterised in that the outlet opening (50) which issues into the open via the air filter (54), traverses the dust cover (40) at a point radially opposite - the recess (26).

**Revendications**

1. Injecteur à béton comportant un rotor (10) qui présente, concentriquement autour de son axe de rotation (14) et parallèlement à celui-ci, des chambres (16) disposées pour recevoir le mélange de beton et qui est rendu étanche sur ses faces d'extrémites par des plaques d'étanchéité (18, 20) en un matériau élastique caoutchouteux, et comportant un évent destine à la chambre vidée respectivement, et qui est constitué par un évidement (26) dans une des plaques d'étanchéité (20) debouchant à l'air libre par l'intermédiaire d'un filtre à air (54), cette plaque d'étanchéité (20) étant préalablement serrée contre la face d'extrémités du rotor (10) à l'aide d'une plaque de serrage en forme de couvercle (32), caractérisée en ce qu'un dispositif de dégorgement (60, 28) actionnable de l'extérieur à l'aide d'un élément de commande (58) est disposé dans l'évidement (26).

2. Injecteur à beton suivant la revendication 1, caractérisé en ce que l'élément de commande (58) est guidé dans la plaque de serrage (32).

3. Injecteur à beton suivant la revendication 1, caractérisé en ce que le dispositif de dégorgement comporte une lamelle flexible (28) s'étendant au-dessus de l'évidement (26) essentiellement dans la direction de l'écoulement.

4. Injecteur à beton suivant la revendication 3, caractérisé en ce que la lamelle (28) constitue une seule pièce avec la plaque d'étanchéité (20).

5. Injecteur à beton suivant la revendication 3 ou 4, caractérisé en ce que la lamelle (28) présente une empreinte en forme de coquille.

6. Injecteur à beton suivant la revendication 5, caractérisé en ce que l'empreinte de la lamelle se situe dans une cavité (56) de la plaque de serrage (32).

7. Injecteur à beton suivant la revendication 6, caractérisé en ce que la lamelle (28) recouvre l'évidement (56) sur tout sa surface.

8. Injecteur à beton suivant une des revendications 6 ou 7, caractérisé en ce que l'élément de commande (58) comporte une branche (60) déplaçable dans la cavité (56) radialement par rapport à l'axe (14) du rotor (10) de façon à repousser la lamelle (28) hors de la cavité (56) lorsqu'on actionne l'élément de commande (58).

9. Injecteur à beton suivant la revendication 7, caractérisé en ce que la lamelle (28) constitue, grâce à son bord situé à l'extérieur dans le sens radial, la prolongation d'une lèvre d'étanchéité (48) dans le sens périphérique, lèvre qui est formée sur tout le périmètre de la plaque d'étanchéité (20) et par laquelle une gaine antipoussière (38, 40, 42) entourant le rotor (10) se raccorde à la plaque de serrage (32).

10. Injecteur à beton suivant la revendication 9, caractérisé en ce que l'orifice d'échappement (50) débouchant à l'air libre par l'intermédiaire du filtre à air (54) traverse la gaine antipoussière (40) à l'endroit situé radialement en face de l'évidement (26).

Fig.1

0 065 731

Fig.2

Fig.3